# EUROPÄISCHE PATENTSCHRIFT

(11) **EP 2 917 609 B1**
(45) Veröffentlichungstag und Bekanntmachung des Hinweises auf die Patenterteilung: **14.09.2016**
(21) Anmeldenummer: 13791927.0
(22) Anmeldetag: 28.10.2013
(51) Int. Cl.: F16H 57/04

(54) **GETRIEBE MIT GEHÄUSETEIL**
TRANSMISSION HAVING A HOUSING PART
TRANSMISSION POURVUE D'UNE PARTIE DE CARTER

(30) Priorität: 12.11.2012 DE 102012022023
(43) Veröffentlichungstag der Anmeldung: 16.09.2015
(73) Patentinhaber: Sew-Eurodrive GmbH & Co. KG, 76646 Bruchsal (DE)
(72) Erfinder: DIETRICH, Stefan, 76149 Karlsruhe (DE); WEBER, Simon, 75428 Illingen-Schützingen (DE)
(86) Internationale Anmeldenummer: PCT/EP2013/003233
(87) Internationale Veröffentlichungsnummer: WO 2014/072030

(56) Entgegenhaltungen:
- EP-A1- 2 410 210
- DE-A1-102010 034 198
- DE-U1-202007 018 371

## Beschreibung

Die Erfindung betrifft ein Getriebe mit Gehäuseteil.

Es ist allgemein bekannt, dass ein Getriebe ein Gehäuseteil aufweist.

**Aus der gattungsgemäßen** EP 2 410 210 A1 **ist ein Getriebe für industrielle Anwendungen bekannt, wobei das Getriebe mit einem Kühler vorgesehen ist.**

**Aus der** DE 10 2010 034 198 A1 **ist eine Anordnung zum Kühlen eines Getriebes bekannt.**

**Aus der** DE 20 2007 018 371 U1 **ist ein Wärmetauschmodul für ein Getriebe bekannt.**

Der Erfindung liegt daher die Aufgabe zugrunde, ein Getriebe mit Gehäuseteil weiterzubilden, wobei das Getriebe einfach herzustellen sein soll.

Erfindungsgemäß wird die Aufgabe bei dem Getriebe nach den in Anspruch 1 angegebenen Merkmalen gelöst.

Wichtige Merkmale der Erfindung bei dem Getriebe mit einem Kühler sind, dass der Kühler einen aus mindestens einem Modul zusammengesetzten Halterahmen aufweist,
wobei eine Rohrleitung um den Halterahmen herum gewickelt vorgesehen ist,
wobei das oder jedes Modul zumindest einen Rundstab aufweist,
an welchem die Rohrleitung umgelenkt ist, insbesondere an welchem eine jeweilige Windung der Rohrleitung umgelenkt ist, insbesondere also zumindest teilweise herumgewunden ist.

Von Vorteil ist dabei, dass die Bewicklung des Halterahmens mit der Rohrleitung vor dem Verbinden des Kühlers mit dem Getriebe erfolgen darf. Somit ist eine besonders einfache Fertigung ausführbar, da nicht ein geknickter Halterahmen bewickelt wird mit der Rohrleitung sondern erst nach Bewicklung des Halterahmens die Module gegeneinander verdreht werden.

Von Vorteil ist außerdem, dass die Rohrleitung am Gehäuseteil befestigbar ist. Somit ist ein Kühlen des Getriebes mittels eines am Getriebe befestigten Kühlers ermöglicht.

Bei einer vorteilhaften Ausgestaltung sind jeweils zwei benachbarte Module mittels eines jeweiligen Drehgelenks verbunden, insbesondere so dass die Module drehbar zueinander angeordnet sind. Von Vorteil ist dabei, dass die Module derart geknickt werden können, dass der Halterahmen entsprechend der Form des Getriebes verläuft und somit eine kompakte Anordnung aus Getriebe und Kühler herstellbar ist..

Bei einer vorteilhaften Ausgestaltung sind die Einkerbungen in Stabrichtung des jeweiligen Rundstabs regelmäßig voneinander beabstandet. Von Vorteil ist dabei, dass die Beabstandung der Windungen der Rohrleitung des Kühlers vorgebbar sind mittels der Einkerbungen.

Bei einer vorteilhaften Ausgestaltung weist jedes Modul zwei Rundstäbe auf, die mittels mindestens eines Verbindungsteils, insbesondere mittels zweier Verbindungsteile, verbunden sind. Von Vorteil ist dabei, dass ein stabiles Modul herstellbar ist.

Bei einer vorteilhaften Ausgestaltung ist der Kühler am Getriebe befestigt, insbesondere wobei das jeweils äußerste Modul des Halterahmens ein Verbindungsblech aufweist, welches mit dem Getriebe, insbesondere mit einem Gehäuseteil des Getriebes, schraubverbunden ist. Von Vorteil ist dabei, dass der Halterahmen in einfacher und stabiler Weise am Getriebe befestigbar ist, wobei die beiden äußersten der in Reihe angeordneten Module des Halterahmens ein Verbindungsblech zur Schraubverbindung mit dem Getriebe aufweisen. Dabei verbindet das Verbindungsblech auch zwei Rundstäbe des jeweiligen Moduls miteinander. Ebenso verbindet das Verbindungsteil die beiden Rundstäbe des jeweiligen Moduls miteinander

Bei einer vorteilhaften Ausgestaltung ist die Rohrleitung aus einem Wellrohr, insbesondere aus einem parallel gewelltem oder spiralgewelltem Rohr, gefertigt, insbesondere wobei das Rohr ein Stahlrohr ist, insbesondere wobei die Wandstärke im Wesentlichen konstant ist. Von Vorteil ist dabei, dass eine einfache Fertigung von Hand ausführbar ist, da nur sehr geringe Biegekräfte notwendig sind..

Bei einer vorteilhaften Ausgestaltung weist der Rundstab und/oder jede zur Umlenkung der Rohrleitung verwendete Einkerbung am Rundstab einen derartigen minimalen Radius auf, dass der minimal zulässige Biegeradius eingehalten ist. Von Vorteil ist dabei, dass ein zu starkes und somit bruchauslösendes Biegen verhinderbar ist mittels der Dimensionierung des Rundstabes, welcher auch die Rohrleitung trägt.

Bei einer vorteilhaften Ausgestaltung weist der Rundstab einen Axialschlitz auf, in welchem ein Kerbblech verbunden ist, welches Einkerbungen aufweist, die in axialer Richtung voneinander beabstandet sind, insbesondere regelmäßig. Von Vorteil ist dabei, dass keine aufwendige Bearbeitung der Rundstabes erforderlich ist sondern nur ein Längsschlitz, in welchen ein einfach fertigbares Kerbblech einfügbar ist. Der Außendurchmesser des Rundstabes bewirkt das Einhalten des Mindestbiegeradius des Rohres der Rohrleitung. Die Positionierung, also Beabstandung, in Stabrichtung wird durch das als Stanzteil einfach herstellbare Kerbblech definiert.

Bei einer vorteilhaften Ausgestaltung weist ein Modul zwei Rundstäbe auf, die mittels zweier Verbindungsteile und/oder mittels eines Verbindungsteils und eines Verbindungsblechs verbunden sind,
insbesondere wobei das Verbindungsblech ein Stanz-Biegeteil ist und/oder das Verbindungsteil ein Stab, insbesondere aus Stahl, ist. Von Vorteil ist dabei, dass jedes Modul mechanisch stabil aufgebaut ist.

Bei einer vorteilhaften Ausgestaltung weist das Verbindungsteil einen Zapfen auf, an welchem ein erstes Gelenkteil drehbar angeordnet ist, das mit einem Rundstab eines ersten Moduls verbunden ist,
insbesondere wobei der Zapfen durch eine Ausnehmung des ersten Gelenkteils hindurchragt, so dass der Rundstab mit erstem Gelenkteil drehbar um den Zapfen herum ist, insbesondere wobei die zugehörige Drehachse der Stabmittelachse gleicht,
insbesondere wobei am Zapfen ein zweites Gelenkteil drehbar angeordnet ist, das mit einem Rundstab eines zweiten Moduls verbunden ist,
insbesondere wobei der Zapfen durch eine Ausnehmung des zweiten Gelenkteils hindurchragt, so dass der Rundstab mit zweitem Gelenkteil drehbar um den Zapfen herum ist, insbesondere wobei die zugehörige Drehachse der Stabmittelachse gleicht. Von Vorteil ist dabei, dass das Drehgelenk am Zapfen des zwischen jeweils zwei Modulen angeordneten Verbindungsteils anordenbar ist. Somit reicht jeweils ein zwischengeordnetes Verbindungsteil aus für jeweils zwei benachbarte Module.

Bei einer vorteilhaften Ausgestaltung sind die Module des Halterahmens derart zueinander gedreht angeordnet, dass der Halterahmen und somit auch der Kühler L-förmig , U-förmig oder I-förmig, also plattenförmig, ausgeführt ist. Von Vorteil ist dabei, dass der Kühler anschmiegbar ist ans Getriebegehäuse und somit dem Verlauf des Getriebegehäuses folgt.

Bei einer vorteilhaften Ausgestaltung ist das Getriebegehäuseteil aus Stahlguss gefertigt. Von Vorteil ist dabei, dass eine kostengünstige Herstellung bei gleichzeitig hoher mechanischer Stabilität ausführbar ist.

Bei einer vorteilhaften Ausgestaltung ist die Einkerbung des Kerbblechs oder des Rundstabs jeweils derart ausgebildet, dass das Rohr einlegbar ist und somit umlenkbar ist. Von Vorteil ist dabei, dass mittels eines einfachen Mittels die Fixierung und Lenkung der Rohrleitung ausführbar ist.

Bei einer vorteilhaften Ausgestaltung ist der der Rundstab als Rotationskörper ausgeformt, dessen Radius in Rotationsachsrichtung ein Minimum aufweist, insbesondere so dass das Minimum einer Einkerbung zugeordnet ist, wobei die Einkerbungstiefe der Tiefe des Minimums, insbesondere relativ zu einem Maximum des Außendurchmessers bestimmt ist. Von Vorteil ist dabei, dass ein einstückiges, mittels eines Verbindungsteils und/oder Verbindungsblechs am Getriebegehäuse befestigtes Umlenkmittel verwendbar ist, das gleichzeitig die Rohrleitung trägt.

Bei einer vorteilhaften Ausgestaltung ist der Rundstab derart gekrümmt ausgeführt, dass das Biegen des umzulenkenden Rohrs auf einen Minimalbiegeradius begrenzt ist,
insbesondere wobei der Minimalbiegeradius derart vorgegeben ist, dass das Rohr bei Unterschreiten dieses Biegeradius bricht und bei Einhalten oder Überschreiten dieses Biegeradius keine Biegebruchgefährdung durch das Umlenkmittel aufweist. Von Vorteil ist dabei, dass das Unterschreiten des Minimalbiegeradius mit einfachen Mitteln verhinderbar ist.

Bei einer vorteilhaften Ausgestaltung weist jede Einkerbung einen Krümmungsradius auf, der gleich oder größer ist als der Außendurchmesser des Rohrs,
insbesondere wobei die Krümmung der Einkerbung in Umlenkrichtung derart ausgeführt ist, dass der Minimalbiegeradius des eingelegten Rohrs eingehalten oder überschritten wird. Von Vorteil ist dabei, dass das Unterschreiten des Minimalbiegeradius durch bloße Formgebung des Rundstabes verhinderbar ist. ,

Bei einer vorteilhaften Ausgestaltung ist der Halterahmen derart, insbesondere mittels der Verbindungsblechteile, am Getriebe befestigt, dass die Rohrleitung einen Abstand vom sonstigen Gehäuseteil aufweist, der dem Durchmesser der Rohrleitung gleicht oder diesen übertrifft. Von Vorteil ist dabei, dass die Kühlung durch die Beabstandung verbessert ist, da die Wärmeabfuhr vom Kühler an die Luft verbesserbar ist.

Bei einer vorteilhaften Ausgestaltung ist die Einlegetiefe, insbesondere also die Tiefe der Einkerbung am Rundstab oder am Kerbblech, gleich oder größer als ein Drittel des maximalen Außendurchmessers des Rohrs. Von Vorteil ist dabei, dass ein sicheres Halten der Rohrleitung in der Einkerbung gewährleistbar ist.

Bei einer vorteilhaften Ausgestaltung umgibt ein Luftleitblech den Kühler, insbesondere gehäusebildend umgibt. Von Vorteil ist dabei, dass der Kühler schützbar ist durch das Luftleitblech. Außerdem ist der Luftstrom des Lüfters am Kühler entlang leitbar. Bei einer vorteilhaften Ausgestaltung ist die Rohrleitung zur Bildung des Kühlers entlang einer Kühlerfläche verlegt, die zylindrisch, L-förmig , U-förmig oder I-förmig, also plattenförmig, ausgeführt ist. Von Vorteil ist dabei, dass der Kühler der Gehäuseform entsprechend formbar ist.

Bei einer vorteilhaften Ausgestaltung ist das Gehäuseteil aus Stahlguss gefertigt. Von Vorteil ist dabei, dass ein stabiles Getriebe herstellbar ist.

Bei einer vorteilhaften Ausgestaltung ist der Rundstab derart gekrümmt ausgeführt, dass das Biegen des umzulenkenden Rohrs auf einen Minimalbiegeradius begrenzt ist,
insbesondere wobei der Minimalbiegeradius derart vorgegeben ist, dass das Rohr bei Unterschreiten dieses Biegeradius bricht und bei Einhalten oder Überschreiten dieses Biegeradius keine Biegebruchgefährdung durch das Umlenkmittel aufweist. Von Vorteil ist dabei, dass mittels Ausformung des Rotationskörpers der Biegewinkel des Rohrs im Umlenkbereich vorgebbar ist.

Bei einer vorteilhaften Ausgestaltung sind die Einkerbungen an den Rundstäben derart angeordnet, dass die Rohrleitung einen Abstand vom sonstigen Gehäuseteil aufweist, der dem Durchmesser der Rohrleitung gleicht oder diesen übertrifft. Von Vorteil ist dabei, dass eine verbesserte Entwärmung erreichbar ist, weil eine Beabstandung zum Getriebegehäuse trotz der Befestigung am Getriebegehäuse erreichbar ist.

Bei einer vorteilhaften Ausgestaltung ist die Einlegetiefe, insbesondere also die Tiefe der Einkerbung am Zapfen oder an der Umlenkleiste und/oder die Tiefe des Minimums, gleich oder größer als ein Drittel des maximalen Außendurchmessers des Rohrs. Von Vorteil ist dabei, dass ein sicherer Sitz des Rohrs in dem Zapfen gewährleistbar ist.

Bei einer vorteilhaften Ausgestaltung umgibt ein Luftleitblech den Kühler, insbesondere gehäusebildend. Von Vorteil ist dabei, dass eine effektivere Kühlung erreichbar ist und auch ein Schutz für den aus der Rohrleitung gebildeten Kühler.

Bei einer vorteilhaften Ausgestaltung ist am Getriebe ein Lüfter angeordnet, dessen Luftstrom entlang der Kühlerfläche und/oder entlang der Rohrleitung oder entlang der die verlegte Rohrleitung aufnehmenden Fläche gerichtet ist,
insbesondere wobei der Lüfter von einer Welle des Getriebes, insbesondere von der eintreibenden Welle des Getriebes, angetrieben ist, insbesondere wobei das Lüfterrad des Lüfters mit der Welle des Getriebes drehfest verbunden ist. Von Vorteil ist dabei, dass eine effektive Entwärmung des Kühlmediums durch die Rohrleitung an den Luftstrom und somit an die Umgebungsluft erreichbar ist.

Bei einer vorteilhaften Ausgestaltung ist eine Pumpe am Getriebe angeordnet, welche ein Kühlmedium, insbesondere ein Gas, eine Flüssigkeit oder das Schmieröl des Getriebes, aus dem Getriebeinnenraum durch die Rohrleitung fördert, insbesondere zurück in den Getriebeinnenraum,
insbesondere wobei die Pumpe angetrieben ist von einer Welle des Getriebes,
insbesondere wobei der Zulauf und/oder Ablauf der Rohrleitung im Ölsumpf des Getriebes mündet oder wobei die Rohrleitung geschlossen durch den Ölsumpf des Getriebes geführt ist, so dass die Wärme des Öls des Getriebes im Getriebeinnenraum ans Kühlmedium übertragbar ist, wobei das durch den Kühler geförderte Kühlmedium Wärme an die Umgebungsluft abgibt. Von Vorteil ist dabei, dass das Kühlmedium durch die Rohrleitung in einfacher Weise förderbar ist, insbesondere abhängig von der im Betrieb vorhandenen Drehzahl. Somit ist das Getriebeinnere entwärmbar. Bei Verwendung von Schmieröl des Getriebes als Kühlmedium ist sogar ein Herausführen und wieder Zurückführen des Schmieröls mittels der Rohrleitung bewirkbar. Somit wird eine effektive Entwärmung des Schmieröls erreichbar.

Bei einer vorteilhaften Ausgestaltung ist das Getriebe mit dem Kühler derart ausgerichtet montiert und die Rohrleitung ist entlang der Kühlerfläche derart verlegt, insbesondere derart mäandrierend verlegt, dass nicht gefördertes Kühlmedium ohne Ansammlung nach unten abfließt, insbesondere zum Zulauf und/oder Ablauf der Rohrleitung hin,
und/oder dass die Rohrleitung derart verlegt ist, dass entlang der Rohrleitung vom Zulauf zum Ablauf nur ein einziges Höhenmaximum durchlaufen wird
und/oder dass die Rohrleitung im Wesentlichen, also mit Ausnahme der Umlenkabschnitte der Rohrleitung, parallel zu einer Kante des Gehäuseteils verlegt ist. Von Vorteil ist dabei, dass ein Entleeren des Kühlers einfach ausführbar ist, indem er unten geöffnet wird und somit das Kühlmedium dort austreten darf. Da es dort vollständig austritt und sich nicht entlang der Rohrleitung ansammelt, ist ein einfacher Austausch oder eine einfache Wartung ermöglicht.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist ein Getriebe gezeigt, das von einem Kühler zumindest teilweise umgeben ist, der innerhalb einer Luftleithaube 10 angeordnet ist, wobei der Kühler eine auf einem Halterahmen vorgesehene Rohrleitung aufweist, wobei der Halterahmen am Getriebe befestigt ist.

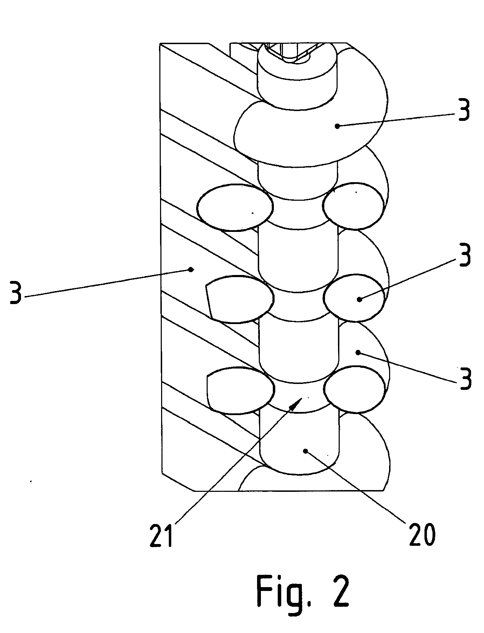

In der Figur 2 ist ein Ausschnitt des Kühlers gezeigt, wobei die Rohrleitung 3 um einen Rundstahl 20 mit Einkerbungen 21 umgelenkt wird, wobei die Rohrleitung teilweise angeschnitten dargestellt ist.

In der Figur 3 ist im Unterschied zur Figur 2 ein anderer Rundstab 30 gezeigt, der ein Kerbblech 31 aufweist.

In der Figur 4 ist ein aus Modulen zusammengesetzter Halterahmen gezeigt, wobei die Module mittels Drehgelenken 9 drehbar gegeneinander angeordnet sind.

In der Figur 5 ist ein Ausschnitt um ein Drehgelenk herum in Schnittansicht gezeigt.

In der Figur 6 ist eines der Module des Halterahmens gezeigt.

In der Figur 7 sind zwei über Drehgelenke 9 miteinander verbundene Module gezeigt.

In der Figur 8 ist ein aus drei Modulen zusammengesetzter U-förmiger Halterahmen gezeigt.

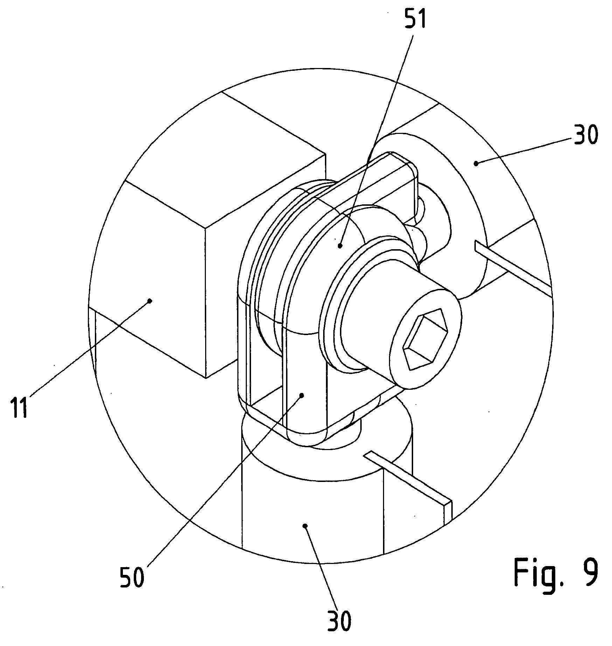

In der Figur 9 ist ein vergrößerter Ausschnitt um ein Drehgelenk herum in Schrägansicht gezeigt

Wie in den Figuren dargestellt, weist das Getriebe ein Gehäuseteil 1 auf, aus welchem eine abtreibende Welle 2 und eine weitere Welle 8 des Getriebes herausragt. Dabei ist ein Lüfterrad 7 drehfest mit dem herausragenden Abschnitt der Welle 8 verbunden, so dass bei Betrieb des Getriebes das Lüfterrad entsprechend der Drehzahl der Welle 8 mitdreht.

Der vom Lüfterrad 7 erzeugte Luftstrom wird von einer Luftleithaube in axiale Richtung, also in Richtung der Achse der Welle 8, umgelenkt und strömt somit entlang des Kühlers.

Der Kühler weist eine zweilagig mäanderförmig verlegte Rohrleitung 3 auf, durch welche ein Kühlmedium, insbesondere Schmieröl des Getriebes oder ein anderes Medium, gefördert wird. Wenn als Kühlmedium Schmieröl verwendet wird, wird dieses aus dem Ölsumpf durch die Gehäusewand herausgefördert und dann nach Durchströmen des Kühlers wieder ins Getriebeinnere zurückgefördert. Wenn als Kühlmedium ein anderes Medium verwendet wird, beispielsweise Wasser, Luft oder dergleichen, ist die Rohrleitung 3 mit einem Wärmetauscher verbunden, der im Getriebeinneren angeordnet ist. Dieser Wärmetauscher ist im einfachsten Fall ebenfalls als Rohrleitung ausgeführt, welche durch den Ölsumpf des Getriebes hindurchführt.

Die Pumpe 5 ist vorzugsweise als Wellenendpumpe ausgeführt, also angetrieben von einer Welle des Getriebes.

Der Halterahmen des Kühlers ist aus gegeneinander drehbar gelagerten Modulen zusammengesetzt.

Dabei weist jedes Module zwei Rundstäbe auf, insbesondere Rundstahl 20 auf, der Einkerbungen 21 aufweist, wobei in Stabrichtung regelmäßig voneinander beabstandete Einkerbungen 21 angeordnet sind. Die Rohrleitung 3 wird mittels des Rundstabs 20, insbesondere mittels seiner Einkerbungen 21, umgelenkt. Dabei ist der Radius des Rundstabs, insbesondere auch im Bereich der Einkerbungen 21 derart gewählt, dass beim Umlenken der Rohrleitung 3 der Mindestbiegeradius eingehalten ist.

Jede Einkerbung 21 lenkt dabei eine jeweilige Windung der Rohrleitung 3 des Kühlers um.

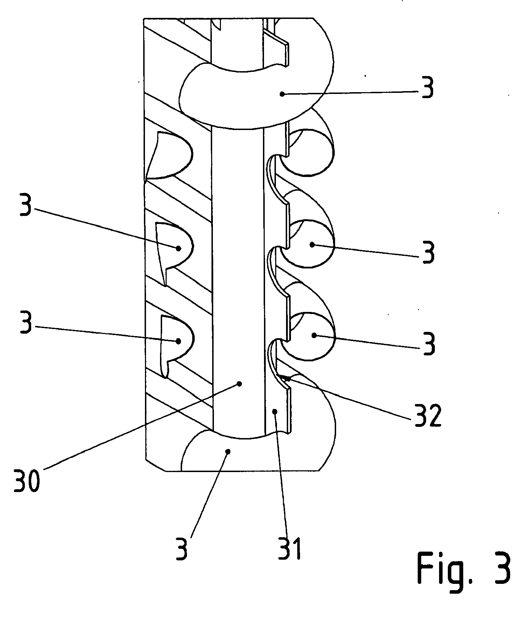

Wie in Figur 3 gezeigt, ist ein anderer Rundstab 30 verwendbar anstatt des Rundstabs 20. Dabei ist der Rundstab 30 zwar ebenfalls ein Rundstahl. Jedoch ist der Rundstab 30 mit einem Längsschlitz ausgeführt, der in Stabrichtung verläuft. Im Schlitz ist ein Kerbblech 31 eingesteckt, welches wiederum in Stabrichtung regelmäßig voneinander beabstandete Einkerbungen 32 aufweist. Das Kerbblech 31 und ebenso der das Kerbblech 32 aufnehmende Längsschlitz ist am Rundstab 30 jeweils nach außen gerichtet, also in der vom anderen Rundstab 30 des jeweils zugeordneten Moduls abgewandten Richtung. Somit wird die Beabstandung der Windungen mittels Beabstandungen der Einkerbungen 32 am Kerbblech 31 festgelegt.

Die Einkerbungen 32 geben den Abstand der Windungen der Rohrleitung 3 vor. Dabei sind die Einkerbungen derart tief ausgeführt, dass sie keinen wesentlichen Abstand zum Rundstab 30 aufweisen. Somit wird der Biegeradius nach unten begrenzt durch den Rundstab 30. Das gebogene Rohr der Rohrleitung 3 liegt nämlich am Rundstab 30 an und wird somit bezüglich seines Biegeradius begrenzt.

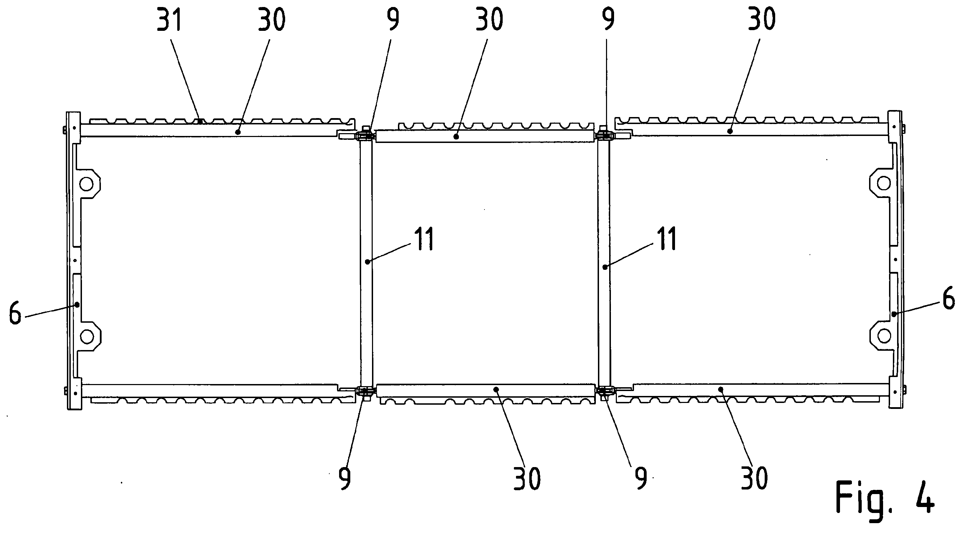

Wie in Figur 4 gezeigt, ist der Halterahmen aus den über die Gelenke 9 drehbar verbundenen Modulen zusammengesetzt. Die äußersten der Module sind jeweils mit einem Verbindungsblech 6 verbunden, die jeweils Ausnehmungen aufweisen, durch welche sie am Gehäuse des Getriebes anschraubbar sind.

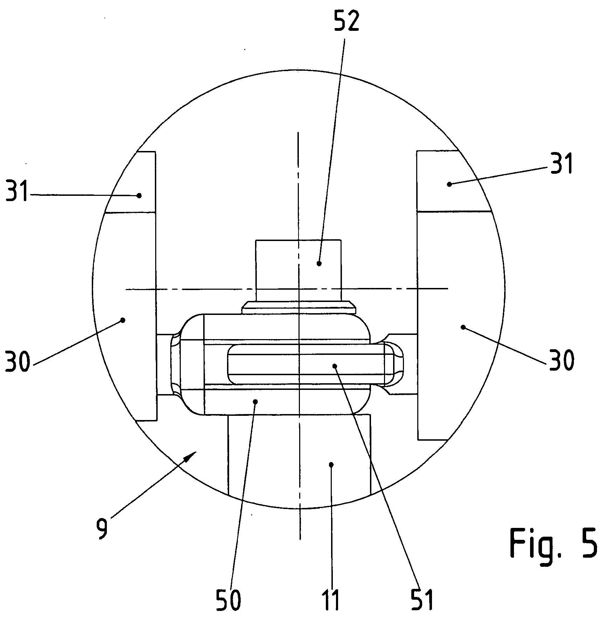

Wie in Figur 5 gezeigt, ist am Endbereich des Rundstabs 30 eines Moduls 50 ein Gelenkteil 51 und am Endbereich des Rundstabs 30 eines zum Modul benachbarten Moduls ein Gelenkteil 52 angeordnet, wobei Gelenkteil 51 und Gelenkteil 52 jeweils eine Ausnehmung aufweisen, durch den ein Zapfen 52 geführt ist, welcher am Endbereich des Verbindungsteils 11 angeordnet ist. Somit ist ein Drehgelenk 9 gebildet, durch welches die Rundstäbe 30 gegeneinander verdrehbar sind.

Somit ist der Halterahmen mit seinen Modulen klappbar ausgeführt an den Verbindungsteilen 11.

Daher ist es einfach ermöglicht, die Rohrleitung 3 um den Halterahmen herumzuwickeln und danach den bewickelten Halterahmen entlang der Oberfläche des Getriebes anzulegen und dabei entsprechend zu klappen, also die Module derart gegeneinander zu verdrehen, dass die Module an dem Getriebe anliegen und mittels der an den äußeren Modulen des Halterahmens angeordneten Verbindungsblechen 6 mit dem Getriebe verbindbar, insbesondere anschraubbar, sind..

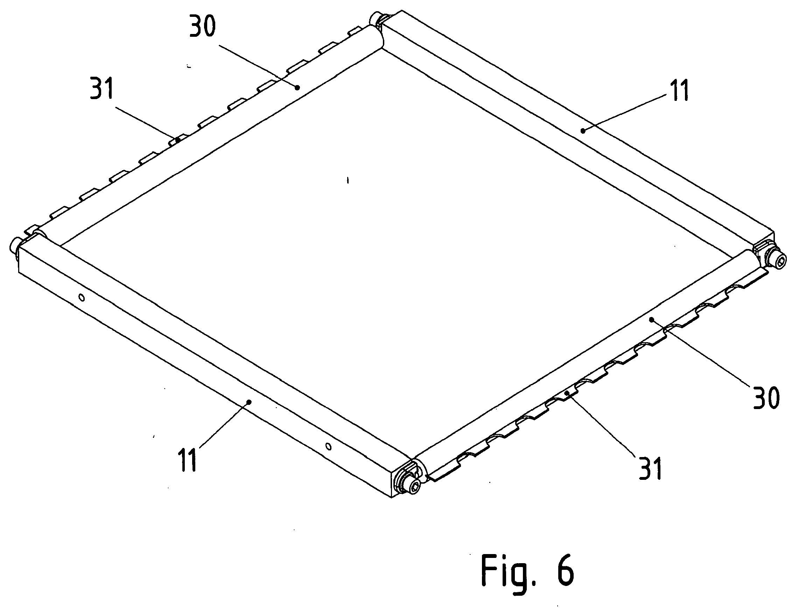

Wie in Figur 6 gezeigt, ist der Halterahmen auch nur aus einem einzigen Modul herstellbar, so dass ein plattenförmiger, also I-förmiger, Kühler mit dem Getriebe verbindbar ist.

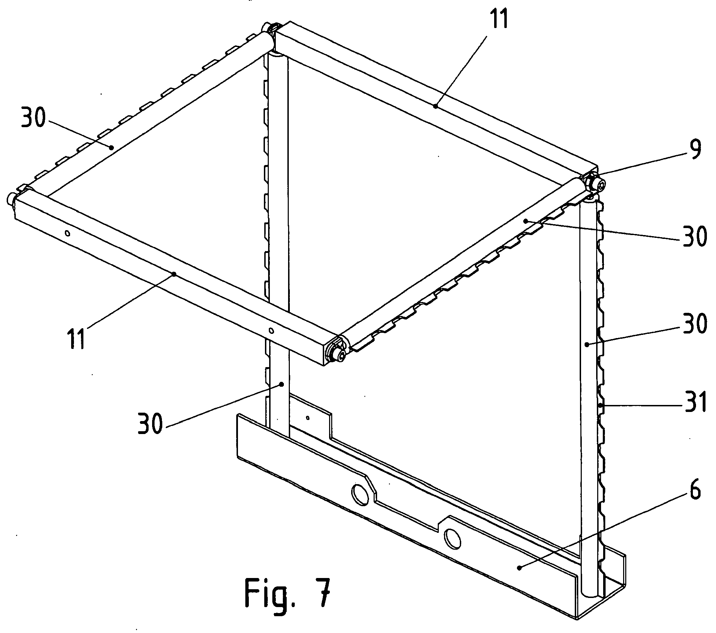

Wie in Figur 7 gezeigt, ist der Halterahmen aber auch aus zwei Modulen zusammensetzbar, so dass ein L-förmiger Kühler ausbildbar und am Getriebe befestigbar ist.

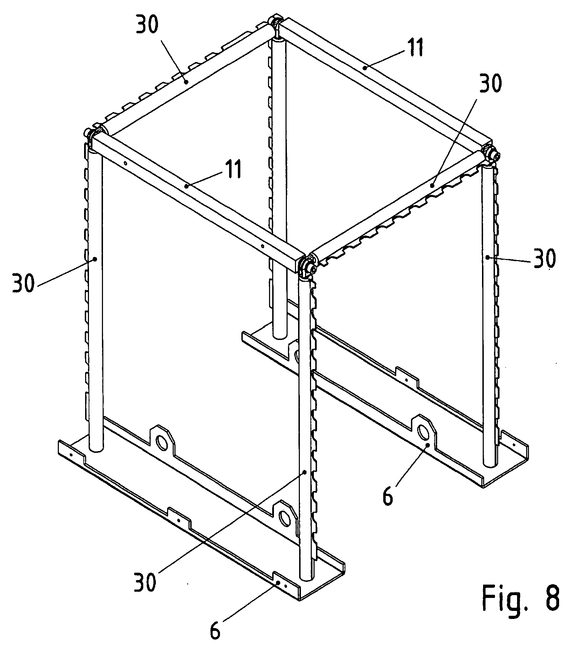

Wie in Figur 8 gezeigt, ist der Halterahmen in einer anderen Variante auch aus drei Modulen zusammensetzbar, so dass ein U-förmiger Kühler ausbildbar und am Getriebe befestigbar ist.

Das Verbindungsteil 11 ist jeweils als Stahlstab oder als Blechteil ausführbar.

Erfindungsgemäß wird die Rohrleitung bei der Umlenkung nicht geknickt sondern nur mit dem minimalen Biegeradius gebogen und somit belastet.

Der Radius am Minimum der konkaven Einkerbung 21 am Rundstab 20 entspricht dem vorgegebenen minimalen Biegeradius D_{MM}/ 2. Die Krümmung der Einkerbung 21 in Richtung der Rotationsachse entspricht dem maximalen Außendurchmesser der Rohrleitung oder überschreitet diesen. Somit definiert das Minimum die Lage der Rohrleitung.

Die Tiefe H der Einkerbung 21 beziehungsweise 32 ist mindestens so tief wie ein Drittel des Durchmessers des Rohrleitung 3.

Die Rohrleitung 3 ist mäanderförmig verlegt, so dass an einem ersten Rundstab (20, 30) eines Moduls eine Umlenkung der Rohrleitung 3 links herum erfolgt und am anderen Rundstab (20, 30) eine Umlenkung rechts herum erfolgt.

Vorzugsweise sind die Einkerbungen (32, 21) regelmäßig voneinander beabstandet, so dass die verschiedenen Windungen der Rohrleitung des Kühlers entsprechend voneinander beabstandet sind.

Die Einkerbungen 21 sind derart um die Ecke herum gerundet ausgeführt, dass der Mindestbiegeradius D_{MIN}/2 eingehalten wird.

Eine Pumpe 5, insbesondere Ölpumpe, treibt das Kühlmedium an. Dabei ist die Pumpe 5 selbst wiederum von einem Elektromotor direkt angetrieben und somit unabhängig vom Getriebe betreibbar oder die Pumpe 5 ist von einer Welle des Getriebes angetrieben und somit nur bei Betrieb des Getriebes betrieben.

Vorzugsweise ist der Kühler mittels der mäanderförmig verlegten Rohrleitung 3 realisiert, deren Zulauf und Einlauf unten, also in Gravitationsrichtung unten, angeordnet ist. Auf diese Weise fließt das Kühlmedium bei ausgeschalteter Pumpe unten heraus. Somit ist ein Entleeren des Kühlers bei Kühlmediumwechsel in einfacher Weise ermöglicht.

Die Rohrleitung 3 ist mit Ausnahme der Umlenkbereiche im Wesentlichen horizontal verlegt.

Mit Ausnahme der Drehbereiche zwischen den Modulen verlaufen die zwischen zwei in Rohrleitungsrichtung aufeinander folgenden Umlenkungen angeordneten Rohrleitungsabschnitte geradlinig.

Vorzugsweise ist bei U-förmiger Ausführung des Kühlers das U in Gravitationsrichtung nach unten offen.

Alternativ ist das U in horizontaler Richtung offen. Insbesondere sind also die Schenkel des U in horizontaler Richtung ausgerichtet.

Wiederum sind aber die Rohrleitungen horizontal ausgerichtet. Die Umlenkungen der Rohrleitung 3 sind an den auf den Schenkeln des U angeordneten Flächen angeordnet, so dass die Rohrleitungsabschnitte zwischen zwei in Rohrleitungsrichtung aufeinander folgenden Umlenkungen U-förmig und nicht geradlinig verlegt sind.

Der Zulauf und der Einlauf sind wiederum derart angeordnet, dass das Kühlmedium beim Entleeren, also Öffnen de Zulaufs und des Einlaufs selbsttätig herausfließt.

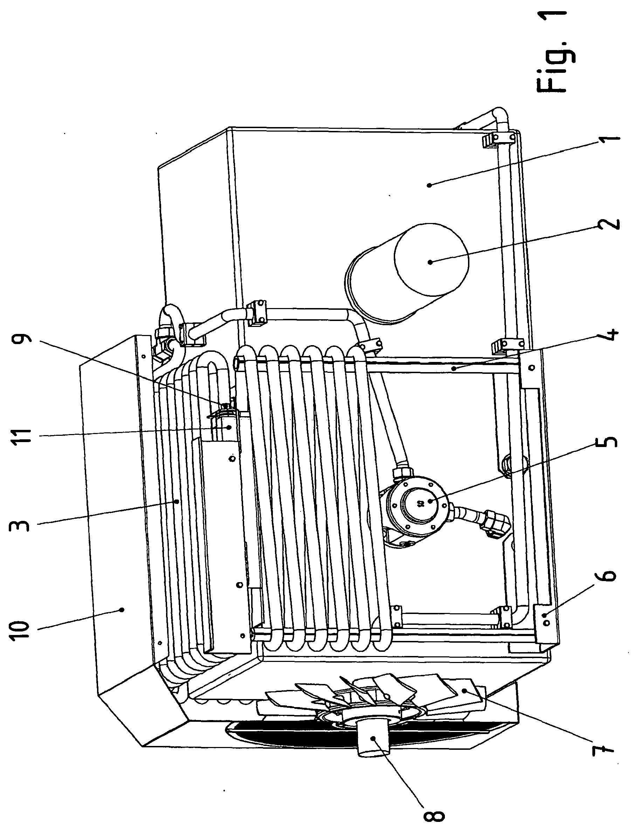

Vorzugsweise umgibt ein Luftleitblech 10 den Lüfter und den Kühler, so dass der vom Lüfter geförderte Luftstrom axial am Kühler vorbeistreicht und/oder diesen umströmt. Der Lüfter ist entweder von einem separat versorgten weiteren Motor angetrieben oder der Lüfter ist von einer Welle des Getriebes angetrieben, insbesondere wobei ein Lüfterrad drehfest mit einer Welle des Getriebes verbunden ist, wie in Figur 1 gezeigt,.

Auf diese Weise ist also wiederum eine effektive Entwärmung des Kühlmediums der Rohrleitung 3 des Kühlers ausführbar, so dass das Kühlmedium die im Inneren des Getriebes aufgenommene Wärme über den Kühler an den Luftstrom und somit die Umgebungsluft abführt.

Das Luftleitblech 10 schützt auch die Rohrleitung gehäusebildend.

Bei weiteren erfindungsgemäßen Ausführungsbeispielen ist der Kühler zweiflutig gestaltet, also zweigeteilt, wobei der Zulauf des Kühlmediums jedes Kühlerteils oben angeordnet ist und der Ablauf jeweils unten. Vorteiligerweise ist somit eine Druckverminderung sowie eine Strömungsgeschwindigkeitsverringerung erreichbar.

Bei weiteren erfindungsgemäßen Ausführungsbeispielen ist das Kühlmedium ein im Inneren des Getriebes vorhandenes Schmieröl, welches mittels der Pumpe durch den Kühler gefördert wird.

Die Rohrleitung 3 ist aus einem spiralgewelltem oder parallelgewelltem Rohr ausgeführt. Somit ist ein einfaches Biegen der Rohrleitung ausführbar. Die Rohrleitung 3 ist aus einem rostfreien Stahl gefertigt, der somit eine gute Wärmeleitfähigkeit aufweist. Die Wandstärke der Rohrleitung beträgt zwischen 0,1 mm und 1 mm.

Das Verhältnis des größten Außendurchmessers der aus Wellrohr ausgeführten Rohrleitung zu ihrem kleinsten Innendurchmesser beträgt zwischen 1,1 und 1,4. Die gewellte Oberfläche des Wellrohrs vergrößert die Oberfläche der Rohrleitung im Vergleich zu einer zylindrisch glatten Rohrleitung und bewirkt somit eine verbesserte Entwärmung, also Wärmeabfuhr vom Kühlmedium an die Umgebung.

### Bezugszeichenliste

- 1: Gehäuseteil
- 2: abtreibende Welle
- 3: Rohrleitung
- 4: Rundstahl
- 5: Pumpe
- 6: Verbindungsblech
- 7: Lüfterrad
- 8: Welle des Getriebes
- 9: Drehgelenk
- 10: Luftleithaube
- 11: Verbindungsteil
- 20: Rundstahl, Rundstab
- 21: Einkerbung
- 30: Rundstahl, Rundstab
- 31: Kerbblech
- 32: Einkerbung
- 50: Gelenkteil
- 51: Gelenkteil
- 52: Zapfen

## Patentansprüche

1. Getriebe mit einem Kühler, wobei
der Kühler einen aus mindestens einem Modul zusammengesetzten Halterahmen aufweist,
**dadurch gekennzeichnet, dass**
eine Rohrleitung (3) um den Halterahmen herum gewickelt vorgesehen ist,
wobei das oder jedes Modul zumindest einen Rundstab (20,30) aufweist,
an welchem die Rohrteitung (3) umgelenkt ist.

2. Getriebe nach Anspruch 1,
**dadurch gekennzeichnet, dass**
jeweils zwei benachbarte Module mittels eines jeweiligen Drehgelenks verbunden sind.

3. Getriebe nach mindestens einem der vorangegangenen Ansprüche,
**dadurch gekennzeichnet, dass**
die Einkerbungen in Stabrichtung des jeweiligen Rundstabs regelmäßig voneinander beabstandet sind.

4. Getriebe nach mindestens einem der vorangegangenen Ansprüche,
**dadurch gekennzeichnet, dass**
jedes Modul zwei Rundstäbe aufweist, die mittels mindestens eines Verbindungsteils verbunden sind.

5. Getriebe nach mindestens einem der vorangegangenen Ansprüche,
**dadurch gekennzeichnet, dass**
der Kühler am Getriebe befestigt ist,
wobei das jeweils äußerste Modul des Halterahmens ein Verbindungsblech aufweist, welches mit dem Getriebe schraubverbunden ist.

6. Getriebe nach mindestens einem der vorangegangenen Ansprüche,
**dadurch gekennzeichnet, dass**
die Rohrleitung aus einem Wellrohr gefertigt ist.

7. Getriebe nach mindestens einem der vorangegangenen Ansprüche,
**dadurch gekennzeichnet, dass**
der Rundstab oder jede zur Umlenkung der Rohrleitung verwendete Einkerbung am Rundstab einen derartigen minimalen Radius aufweist, dass der minimal zulässige Biegeradius eingehalten ist.

8. Getriebe nach mindestens einem der vorangegangenen Ansprüche,
**dadurch gekennzeichnet, dass**
der Rundstab einen Axialschlitz aufweist, in welchem ein Kerbblech verbunden ist, welches Einkerbungen aufweist, die in axialer Richtung voneinander beabstandet sind.

9. Getriebe nach mindestens einem der vorangegangenen Ansprüche,
**dadurch gekennzeichnet, dass**
ein Modul zwei Rundstäbe aufweist, die mittels zweier Verbindungsteile oder mittels eines Verbindungsteils und eines Verbindungsblechs verbunden sind.

10. Getriebe nach mindestens einem der vorangegangenen Ansprüche,
**dadurch gekennzeichnet, dass**
das Verbindungsteil einen Zapfen aufweist, an welchem ein erstes Gelenkteil drehbar angeordnet ist, das mit einem Rundstab eines ersten Moduls verbunden ist.

11. Getriebe nach mindestens einem der vorangegangenen Ansprüche,
**dadurch gekennzeichnet, dass**
die Module des Halterahmens derart zueinander gedreht angeordnet sind, dass der Halterahmen und somit auch der Kühler L-förmig , U-förmig oder I-förmig, also plattenförmig, ausgeführt ist.

12. Getriebe nach mindestens einem der vorangegangenen Ansprüche,
**dadurch gekennzeichnet, dass**
die Einkerbung des Kerbblechs oder des Rundstabs jeweils derart ausgebildet ist, dass das Rohr einlegbar ist und somit umlenkbar ist,
oder dass
der Rundstab als Rotationskörper ausgeformt ist, dessen Radius in Rotationsachsrichtung ein Minimum aufweist.

13. Getriebe nach mindestens einem der vorangegangenen Ansprüche,
**dadurch gekennzeichnet, dass**
der Rundstab derart gekrümmt ausgeführt ist, dass das Biegen des umzulenkenden Rohrs auf einen Minimalbiegeradius begrenzt ist.

14. Getriebe nach mindestens einem der vorangegangenen Ansprüche,
**dadurch gekennzeichnet, dass**
jede Einkerbung einen Krümmungsradius aufweist, der gleich oder größer ist als der Außendurchmesser des Rohrs.

15. Getriebe nach mindestens einem der vorangegangenen Ansprüche,
**dadurch gekennzeichnet, dass**
der Halterahmen derart am Getriebe befestigt ist, dass die Rohrleitung einen Abstand vom sonstigen Gehäuseteil aufweist, der dem Durchmesser der Rohrleitung gleicht oder diesen übertrifft.

16. Getriebe nach mindestens einem der vorangegangenen Ansprüche,
**dadurch gekennzeichnet, dass**
das Getriebe mit dem Kühler derart ausgerichtet montiert ist und dass die Rohrleitung entlang der Kühlerfläche derart verlegt ist, dass nicht gefördertes Kühlmedium ohne Ansammlung nach unten abfließt.

## Claims

1. Gearing having a cooler, wherein
the cooler comprises a holding frame composed of at least one module,
**characterised in that**
a pipe (3) is provided wound around the holding frame, wherein the or each module comprises at least one round bar (20, 30),
on which the pipe (3) is turned round.

2. Gearing according to Claim 1,
**characterised in that**
each two adjacent modules are connected by means of a respective rotary joint.

3. Gearing according to at least one of the preceding claims,
**characterised in that**
the notches are spaced regularly from one another in the bar direction of the respective round bar.

4. Gearing according to at least one of the preceding claims,
**characterised in that**
each module comprises two round bars, which are connected by means of at least one connecting part.

5. Gearing according to at least one of the preceding claims,
**characterised in that**
the cooler is fastened to the gearing,
wherein the respectively outermost module of the holding frame comprises a connecting plate, which is screw-connected to the gearing.

6. Gearing according to at least one of the preceding claims,
**characterised in that**
the pipe is made of a corrugated pipe.

7. Gearing according to at least one of the preceding claims,
**characterised in that**
the round bar or each notch on the round bar used for turning round the pipe has a minimum radius such that the minimum allowable bending radius is adhered to.

8. Gearing according to at least one of the preceding claims,
**characterised in that**
the round bar comprises an axial slot in which a notched plate is connected, which has notches which are spaced from one another in the axial direction.

9. Gearing according to at least one of the preceding claims,
**characterised in that**
a module comprises two round bars, which are connected by means of two connecting parts or by means of one connecting part and one connecting plate.

10. Gearing according to at least one of the preceding claims,
**characterised in that**
the connecting part comprises a pin, on which a first joint part is rotatably arranged, which first joint part is connected to a round bar of a first module.

11. Gearing according to at least one of the preceding claims,
**characterised in that**
the modules of the holding frame are arranged rotated with respect to one another in such a way that the holding frame and thus also the cooler is of L-shaped, U-shaped or I-shaped, i.e. plate-shaped, design.

12. Gearing according to at least one of the preceding claims,
**characterised in that**
the notch of the notched plate or of the round bar is respectively formed in such a way that the pipe can be inserted and thus turned round,
or **in that**
the round bar is formed as a body or revolution whose radius in the rotation axis direction is at a minimum.

13. Gearing according to at least one of the preceding claims,
**characterised in that**
the round bar is designed curved in such a way that the bending of the pipe to be turned round is limited to a minimum bending radius.

14. Gearing according to at least one of the preceding claims,
**characterised in that**
each notch has a radius of curvature which is equal to or greater than the outer diameter of the pipe.

15. Gearing according to at least one of the preceding claims,
**characterised in that**
the holding frame is fastened to the gearing in such a way that the pipe is at a distance from the other housing part which is equal to or exceeds the diameter of the pipe.

16. Gearing according to at least one of the preceding claims,
**characterised in that**
the gearing is mounted aligned with the cooler in such a way, and **in that** the pipe is laid along the cooler surface in such a way, that cooling medium not conveyed flows off downwards without accumulation.

## Revendications

1. Transmission équipée d'un refroidisseur,
ledit refroidisseur comportant un cadre de retenue constitué d'au moins un module, **caractérisée par le fait**
**qu'**un conduit tubulaire (3) est prévu avec enroulement tout autour du cadre de retenue, le, ou chaque module présentant au moins une barre ronde (20, 30) au niveau de laquelle ledit conduit tubulaire (3) est dévié.

2. Transmission selon la revendication 1,
**caractérisée par le fait que**
deux modules voisins sont reliés, à chaque fois, au moyen d'une articulation tournante respective.

3. Transmission selon au moins l'une des revendications précédentes,
**caractérisée par le fait que**
les encoches sont régulièrement espacées les unes des autres dans la direction de la barre ronde considérée.

4. Transmission selon au moins l'une des revendications précédentes,
**caractérisée par le fait que**
chaque module comprend deux barres rondes, reliées à l'aide d'au moins une partie de liaison.

5. Transmission selon au moins l'une des revendications précédentes,
**caractérisée par le fait que**
le refroidisseur est fixé à ladite transmission,
sachant que le module du cadre de retenue, qui est respectivement situé le plus à l'extérieur, comporte une tôle de liaison solidarisée par vissage avec ladite transmission.

6. Transmission selon au moins l'une des revendications précédentes,
**caractérisée par le fait que**
le conduit tubulaire est produit à partir d'un tube ondulé.

7. Transmission selon au moins l'une des revendications précédentes,
**caractérisée par le fait que**
la barre ronde, ou chaque encoche située sur ladite barre ronde et utilisée pour la déviation du conduit tubulaire, présente un rayon minimal propre à entretenir le rayon de cintrage minimal admissible.

8. Transmission selon au moins l'une des revendications précédentes,
**caractérisée par le fait que**
la barre ronde comporte une fente axiale, dans laquelle est rattachée une tôle crénelée pourvue d'encoches distantes les unes des autres dans la direction axiale.

9. Transmission selon au moins l'une des revendications précédentes,
**caractérisée par le fait**
**qu'**un module comprend deux barres rondes reliées au moyen de deux parties de liaison, ou au moyen d'une partie de liaison et d'une tôle de liaison.

10. Transmission selon au moins l'une des revendications précédentes,
**caractérisée par le fait que**
la partie de liaison comporte un tenon sur lequel est implantée, à rotation, une première partie d'articulation reliée à une barre ronde d'un premier module.

11. Transmission selon au moins l'une des revendications précédentes,
**caractérisée par le fait que**
les modules du cadre de retenue sont déjetés les uns par rapport aux autres de façon telle que ledit cadre de retenue, et donc également le refroidisseur, présentent une réalisation configurée en L, en U ou en I, c'est-à-dire en forme de plaque.

12. Transmission selon au moins l'une des revendications précédentes,
**caractérisée par le fait que**
l'encoche de la tôle crénelée, ou de la barre ronde, est respectivement ménagée de telle sorte que le tube puisse être encastré, et donc dévié,
ou que
ladite barre ronde revêt la forme d'un solide de révolution dont le rayon présente un minimum dans la direction de l'axe de rotation.

13. Transmission selon au moins l'une des revendications précédentes,
**caractérisée par le fait que**
la barre ronde est réalisée avec une courbure telle que le cintrage du tube, devant être dévié, soit cantonné à un rayon de cintrage minimal.

14. Transmission selon au moins l'une des revendications précédentes,
**caractérisée par le fait que**
chaque encoche présente un rayon de courbure égal ou supérieur au diamètre extérieur du tube.

15. Transmission selon au moins l'une des revendications précédentes,
**caractérisée par le fait que**
le cadre de retenue est fixé à ladite transmission de façon telle que le conduit tubulaire soit séparé, du reste de la partie de carter, d'une distance égale au diamètre dudit conduit tubulaire, ou excédant ledit diamètre.

16. Transmission selon au moins l'une des revendications précédentes,
**caractérisée par le fait que**
ladite transmission est montée avec une orientation du refroidisseur telle que le conduit tubulaire soit agencé, le long de la surface dudit refroidisseur, de telle sorte que du fluide de refroidissement non circulant s'écoule vers le bas, sans accumulation.
